# EUROPEAN PATENT APPLICATION

(11) **EP 4 786 034 A1**
(43) Date of publication of application: **05.08.2026**
(21) Application number: 25154878.0
(22) Date of filing: 30.01.2025
(51) Int. Cl.: B01D 63/02

(54) **POTTING COMPOUNDS FOR HOLLOW FIBRE FILTER ASSEMBLY**

(71) Applicant: Henkel AG & Co. KGaA, 40589 Düsseldorf (DE)
(72) Inventor: Holtgrewe, Christian, 40225 Düsseldorf (DE); Picon Miranda, Vanessa Alexandra, 41469 Neuss (DE); Eckstein, Andrea, 40476 Düsseldorf (DE)

(57) **Abstract**

The present invention relates to a potting composition comprising a) from 40 to 60% by weight of the total weight of the composition of sorbitol polyglycidyl ether; b) from 27 to 40% by weight of the total weight of the composition of titanium dioxide; and c) a curing agent comprising from 3 to 8% by weight of the total weight of the composition of isophrone diamine and from 14 to 19% by weight of the total weight of the composition of amidation products of tall-oil fatty acids with diethylenetriamine or from 7 to 16% by weight of the total weight of the composition of isophrone diamine.

## Description

### Technical field of the invention

The present invention relates to sorbitol polyglycidyl ether based potting compounds for hollow fibre filter assembly.

### Background of the invention

Filtration is the process of separating, fractionating or concentrating particles, molecules or ions within or from a fluid by forcing the material - under the influence of pressure, vacuum, concentration gradient, valence or electrochemical affinity - through a porous or semi-porous barrier or filtration medium. Whilst known filtration media are often classified as depth filters, screen filters (mesh) or membranes, the present application is concerned with hollow fibre membrane filtration, which method finds utility in applications as divergent as purification, diafiltration, desalination, particle fractionation, molecular concentration, molecular separation, fluid sterilization and fluid clarification.

As is established in the art, most membrane filters are either ceramic or synthesized from polymers, such as polysulfone and cellulose acetate, by processes including solvent casting, sintering, stretching or nuclear particle track etching. Each of these processes produces a thin membrane with a relatively well defined flow rate, pore size, pore structure, pore density, bubble point and tensile strength. Due to these predefined characteristics, the filtration efficiency of membrane filters can be accurately predicted under different process conditions.

For example, the structure and rated pore size of a microporous membrane filter will establish what matter will be surface captured or rejected by the membrane and, further, whether interstitial entrapment of particles smaller than the rated pore size will occur.

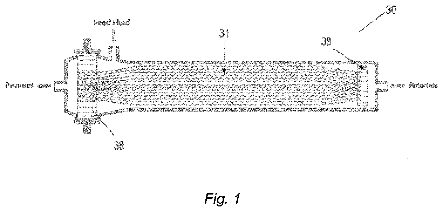

Hollow fibre membrane modules are preferred in many applications - and in particular in reverse osmosis and ultrafiltration applications - on account of their cost, disposability, superior flow dynamics and achievable packing density. Figure 1 exemplifies a housing (30) enclosing a hollow fibre membrane: therein hollow fibres (31) are disposed within the housing and are affixed using a potting material (38). During conventional potting operations of devices of this kind, the plurality or bundle of fibres (31) is inserted into its housing (30), and then the liquid potting compound impregnates the ends of the bundle while the housing is spun about a central axis to hold the potting compound at the ends of the bundle.

Conventionally, the degree of penetration of potting material into the bores of the hollow fibres (or capillary tubing) at both ends thereof is substantially less than the level of potting material permeating the bundle outside of the bores, because the air inside of the bores is compressed as the potting material advances into the bores from both ends, causing a counter-pressure which inhibits the advance of potting material into the bores. As the result of this, when the potting composition is cured, one can cut transversely through the middle of the potting composition at the ends of each bundle to expose open bores, which is necessary in order to obtain an operable filtration membrane.

The hollow fibres (31) have been depicted in Figure 1 as being crimped but this is for illustration only as other structures are known in the art. Moreover, in important commercial variants, hollow fiber membranes are composed of a gas permeable composite membrane formed of a gas permeable homogeneous layer and a porous support layer onto which the homogeneous layer is disposed.

In the context of the present application, the configuration of the hollow fibre membrane module is not limited to that illustrated in Figure 1. The module may, for instance, further include one or more devices for restraining the hollow fibre membrane bundle at a region fixed by the potting material. Exemplary hollow fibre membrane filtration modules constructed using curable potting compositions are described in, for example: US Patent No. 8,758,621; US Patent No. 8,518,256; US Patent No. 7,931,463; US Patent No. 7,022,231; US Patent No. 7,005,100; US Patent No. 6,974,554; US Patent No. 6,648,945; US Patent No. 6,290,756; and, US2006/0150373. The disclosures of these citations are incorporated herein by reference in their entirety.

It will be recognized that the potting material (38) are used *inter alia* to seal the overall membrane module and to stabilize the hollow fibres or sheets thereof. Further, the potting or bonding material ensures that the product streams and feed streams do not mix and that any applied pressure or vacuum can be maintained. Consequently, for many applications, any defect in the seal provided by these compositions will be determinative of the operational life of the membrane module.

Traditionally such potting compositions are based on polyurethane and epoxy resins. As regards the former, US Patent No. 4,227,295 (Bodnar et al.) describes a method of potting the ends of a bundle of hollow fibres disposed in a casing and having utility as in dialyzers for blood. The ends of the bundle of capillary fibres are each sealed in a polyurethane potting compound, with the bores of the capillary fibres communicating through the sealant at each end.

Potting compositions based on epoxy resins are not so susceptible to moisture. However, epoxy resins generate heat during curing which causes the epoxy to expand as it cures but contract as it cools following the completion of the reaction. The cooling can create stresses and voids in the finished product and promote cracking and other flaws. These effects can be mitigated either by slowing the curing reaction to reduce the amount of generated or by cooling the material as it cures to reduce thermal expansion. Problematically, slowing the process will increase process lead time and reduce manufacturing efficiency, while cooling adds both complexity and cost to the potting operation.

Ordinary potting compounds for hollow fibre filtration for water and beverage filtration applications are based on bis-phenol A epoxides. There are health concerns relating to bis-phenyl A epoxides, however, these resins provide the cure exotherm assuring significant glass transition temperature (Tg) which filter assembly tolerates. In addition, these resins withstand repeated cleaning cycles during their lifetime using aggressive chemicals at very high or very low pH-values at elevated temperatures. Many alternative resins which are cured to similar Tgs exhibit a cure exotherm which is too high for common filter assemblies, and their chemical and heat resistance is also not on a required level.

Therefore, there is need for new potting compositions, without health concerns and provide the cure exotherm assuring significant glass transition temperature (Tg) which filter assembly tolerates while having good cure speed and chemical and heat resistance.

### Summary of the invention

The present invention relates to a potting composition comprising a) from 40 to 60% by weight of the total weight of the composition of sorbitol polyglycidyl ether; b) from 27 to 40% by weight of the total weight of the composition of titanium dioxide; and c) a curing agent comprising from 3 to 8% by weight of the total weight of the composition of isophrone diamine and from 14 to 19% by weight of the total weight of the composition of amidation products of tall-oil fatty acids with diethylenetriamine or from 7 to 16% by weight of the total weight of the composition of isophrone diamine.

The present invention also relates to cured potting composition according to the present invention.

The present invention encompasses use of a potting composition according to the present invention in hollow fibre filtration for water and beverages.

The present invention also encompasses a membrane filter module comprising a separation membrane and a module case, wherein the separation membrane is a hollow fibre membrane, and wherein the ends of the hollow fibre membrane arranged in the module case are potted using the potting composition or cured potting composition according to the present invention.

### Short summary of the figures

Figure 1 illustrates a hollow fibre membrane module.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words "*preferred*"*, "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

As used herein, the term *"epoxide"* denotes a compound characterized by the presence of at least one cyclic ether group, namely one wherein an ether oxygen atom is attached to two adjacent carbon atoms thereby forming a cyclic structure.

As used herein, the term *"potting material"* is intended to include materials that can be used to hold a filtration membrane, such a hollow fibre membrane in a fixed positional relationship. For example, the potting material will hold hollow fibres in a fixed positional relationship with one another, where applicable. The potting material may also serve to direct feed, filtrate, concentrate and retentate flow in, around and through the membrane.

As used herein, room temperature is 23°C plus or minus 2°C. As used herein, *"ambient conditions"* means the temperature and pressure of the surroundings in which the composition is located or in which a coating layer or the substrate of said coating layer is located.

The present invention relates to a potting composition comprising a) from 40 to 60% by weight of the total weight of the composition of sorbitol polyglycidyl ether; b) from 27 to 40% by weight of the total weight of the composition of titanium dioxide; and c) a curing agent comprising from 3 to 8% by weight of the total weight of the composition of isophrone diamine and from 14 to 19% by weight of the total weight of the composition of amidation products of tall-oil fatty acids with diethylenetriamine or from 7 to 16% by weight of the total weight of the composition of isophrone diamine.

The potting composition according to the present invention may have utility in the potting of hollow fibres or hollow fibre modules found with dialzyers, and water and beverage filtration systems. The potting material should desirably have utility in the potting of at least one membrane within the housing of a filtration module.

The potting composition according to the present invention enables the further use of potting compounds not having bis-phenol A epoxy resins without changing design or application parameters of the filter assembly. Surprisingly, sorbitol polyglycidyl ether provides increased reactivity and therefore more efficient production will be possible. Furthermore, the potting composition according to the present invention provides good heat and chemical resistance and desired cure exotherms for filter membrane assembly.

The potting composition according to the present invention comprises sorbitol glycidyl ether.

Surprisingly sorbitol glycidyl ether provides desired cure exotherms and heat and chemical resistance.

Suitable commercially available sorbitol glycidyl ethers for use in the present invention include but are not limited to Erysis 60 from Huntsman, Epiol 510 from Kukdo.

Sorbitol glycidyl ether is present in the potting composition according to the present invention from 40 to 60% by weight of the total weight of the composition, preferably from 41 to 58% by weight of the total weight of the composition, preferably from 42 to 57% and more preferably from 43 to 56%.

Thes quantities are preferred as they provide sufficiently high glass transition temperature (Tg) for the final product.

It is noted that the potting composition according to the present invention is free of bisphenol-A epoxies and bisphenols.

The potting composition according to the present invention comprises a filler, which is titanium dioxide. Titanium dioxide filler is used to improve chemical resistance and to reduce the cure exotherm without reducing the glass transition temperature (Tg) of the polymer.

Titanium dioxide exhibits significant chemical resistance against high and low pH-cleaning solutions. Additionally, the use of titanium dioxide filler reduces the cure exotherm temperature while maintaining the increased reactivity leading to shorter cure times (measured with the cure exotherm time) compared to bis-phenyl A epoxy-based resins, which will enable faster processing.

Suitable commercially available titanium dioxide for use in the present invention include but is not limited to Tiona from Tronox.

Titanium dioxide is present in a quantity from 27 to 40% by weight of the total weight of the composition, preferably from 28 to 39%, more preferably from 29 to 38%, and even more preferably from 30 to 37%.

These quantities are preferred as they provide ideal technical effect without adversely affecting to other properties. Too high quantities, more than 40%, may lead to too high viscosity, whereas too low quantities, below 27% may lead not sufficient reduction of the cure exotherm temperature.

The potting composition according to the present invention comprises a curing agent.

The curing agent may be isophrone diamine or a combination of isophrone diamine and amidation products of tall-oil fatty acids with diethylenetriamine.

Isophrone diamine is preferred due to the possibility to provide high glass transition temperature (Tg), whereas tall oil fatty acid are preferred because they are low exotherm materials.

Suitable commercially available curing agents for use in the present invention include but are not limited to Aradur 42 from Huntsman and Ancamide 3419 and Vestamin IPD from Evonik.

When the curing agent is the combination of isophrone diamine and amidation products of tall-oil fatty acids with diethylenetriamine, isophrone diamine is present in the composition from 3 to 8% by weight of the total weight of the composition, preferably from 4 to 7%, and more preferably from 4.5 to 6.5% and amidation products of tall-oil fatty acids with diethylenetriamine is present from 14 to 19% by weight of the total weight of the composition, preferably from 15 to 18%, and more preferably from 15.5 to 17.5%.

When the curing agent is isophrone diamine, it is present in the composition from 7 to 16% by weight of the total weight of the composition, preferably from 8 to 15%, and more preferably from 9 to 14.

The above listed curing agent quantity ranges are preferred because they provide ideal cure with good glass transition temperature (Tg) values and mechanical properties.

The potting composition according to the present invention may be prepared by first mixing sorbitol polyglycidyl ether and titanium dioxide together in a first container, while a curing agent comprising isophrone diamine and amidation products of tall-oil fatty acids with diethylenetriamine or isophrone diamine is mixed in a second container, and subsequently the mixture from the second container is mixed into the mixture in the first container.

The potting composition according to the present invention may have the glass transition temperature (Tg) of the composition from 98°C to 114°C, preferably from 100°C to 112°C, wherein the glass transition temperature is determined according to ASTM D 7426 applying a heating rate of 10 K/min.

These glass transition temperature ranges are desired as the final product withstands high and low pH cleaning cycles.

The potting composition according to the present invention may have the exothermic peak from 110°C to 155°C, preferably from 112°C to 153°C, wherein the exothermic peak is measured according to test method described in the examples section.

These exothermic peak ranges are desired as they allow safe filter assembly without damaging materials.

The potting composition according to the present invention may have pH resistance from 1 to 13 at 80°C, at least 2000 hours.

The potting composition according to the present invention provides good pH resistance to ensure that no decomposition occurs during high pH cleaning cycles.

The potting composition according to the present invention may have Brookfield viscosity at 25°C about 3300mPas measured according to ISO 2555:2018.

The present invention relates to a cured potting composition according to the present invention, wherein the composition may be cured at room temperature.

The present invention relates to use of a potting composition or cured potting composition according to the present invention in hollow fibre filtration for water and beverages.

The present invention relates to a membrane filter module comprising a separation membrane and a module case, wherein the separation membrane is a hollow fibre membrane, and wherein the ends of the hollow fibre membrane arranged in the module case are potted using the potting composition or cured potting composition according to the present invention.

### Examples

Potting compositions according to the present invention and comparative examples were prepared in accordance with Table 1 herein below:
The potting compositions according to the present invention were prepared by first mixing sorbitol polyglycidyl ether and titanium dioxide together in a first container, while the curing agent comprising isophrone diamine and amidation products of tall-oil fatty acids with diethylenetriamine or isophrone diamine was mixed in a second container and subsequently mixture from the second container was mixed into the mixture in the first container.

**Table 1**

| | Compara tive example 1 | Example 1 | Example 2 | Compara tive example 2 | Compara tive example 3 | Compara tive example 4 |
|---|---|---|---|---|---|---|
| BPA Epoxy DER 331 from Olin | 71.9 | | | | | |
| Sorbitol Epoxy Erysis 60 from Huntsman | | 45.02 | 53.75 | 70.56 | 70.56 | 79.32 |
| IPDA (Isophorone diamine) Aradur 42 from Huntsman | 5.62 | 5.5 | 11.56 | 14.72 | 14.72 | 16.54 |
| Fatty acids, tall-oil, reaction products with diethylenetriamine Ancamide 3419 from evonik | | 16.5 | | | | |
| Fatty Acids reaction products with diethylenetriamine from BB amide 5051 BB resin | 22.48 | | | | | |
| Titanium Dioxide Tiona from Tronox | | 32.98 | 34.69 | 14.72 | | 4.14 |
| Calsium carbonate Millicarb from Omya | | | | | 14.72 | |
| Total | 100 | 100 | 100 | 100 | 100 | 100 |

Glass transition temperature, exothermic testing and pH was measured according to test methods listed below and the test results are listed in Table 2 herein below.

Glass Transition Temperature (Tq, °C): The glass transition temperature is determined according to ASTM D 7426 applying a heating rate of 10 K/min. The temperatures reported here are the midpoints of the glass transition.

Exotherm testing: To determine the exotherm behaviour of the potting compound, 300g of the composition mixed under vacuum in a DAC 600.1 FVZ Speedmixer. Afterwards 200g of the reaction mixture are placed in a 1l plastic bottle. Aluminium tube a Pt100 thermocouple is introduced into the middle of the reaction mixture. The bottle is closed with a screw cap and the assembly is placed in a tightly fitting PU-foam insulation mantle. The temperature of the curing mixture is recorded with a suitable device at a high enough frequency that a peak maximum can be clearly identified.

pH: pH is tested with special solution with specifics pH.

**Table 2**

| | | | | | | |
|---|---|---|---|---|---|---|
| Exotherm Peak | 198,1 | 193,7 | 206 | 213 | 264 | 204 |
| Exotherm peak time | 19 | 4 | 9 | 19 | 9 | 96 |
| Tg | 106 | 98 | 84 | 104 | 104 | 104 |
| Resistance pH 1 at 80°C | Not pass | | | | | |
| Resistance pH 13 at 80°C | Not pass | | | | | |

## Claims

1. A potting composition comprising
a) from 40 to 60% by weight of the total weight of the composition of sorbitol polyglycidyl ether;
b) from 27 to 40% by weight of the total weight of the composition of titanium dioxide; and
c) a curing agent comprising
from 3 to 8% by weight of the total weight of the composition of isophrone diamine and from 14 to 19% by weight of the total weight of the composition of amidation products of tall-oil fatty acids with diethylenetriamine
or
from 7 to 16% by weight of the total weight of the composition of isophrone diamine.

2. A potting composition according to claim 1 wherein in sorbitol polyglycidyl ether is present in a quantity from 41 to 58% by weight of the total weight of the composition, preferably from 42 to 57% and more preferably from 43 to 56%.

3. A potting composition according to claim 1 or 2 wherein titanium dioxide is present in a quantity from 28 to 39% by weight of the total weight of the composition, preferably from 29 to 38% and more preferably from 30 to 37%.

4. A potting composition according to any of claims 1 to 3 wherein in the curing agent comprising
from 4 to 7% by weight of the total weight of the composition of isophrone diamine, preferably 4.5 to 6.5% and from 15 to 18% by weight of the total weight of the composition of amidation products of tall-oil fatty acids with diethylenetriamine, preferably from 15.5 to 17.5%
or
from 8 to 15% by weight of the total weight of the composition of isophrone diamine, preferably from 9 to 14.

5. A potting composition according to any of claims 1 to 4 wherein the glass transition temperature of the composition is from 98°C to 114°C, preferably from 100°C to 112°C, wherein the glass transition temperature is determined according to ASTM D 7426 applying a heating rate of 10 K/min.

6. A potting composition according to any of claims 1 to 5, wherein the composition has the exothermic peak from 110°C to 155°C, preferably from 112°C to 153°C, wherein the exothermic peak is measured according to test method described in the description.

7. A cured potting composition according to any of claims 1 to 6.

8. Use of a potting composition according to any of claims 1 to 6 or cured potting composition according to claim 7, in hollow fibre filtration for water and beverages.

9. A membrane filter module comprising a separation membrane and a module case, wherein the separation membrane is a hollow fibre membrane, and wherein the ends of the hollow fibre membrane arranged in the module case are potted using the potting composition according to any of claims 1 to 6 or cured potting composition according to claim 7.
